# FASCICULE DE BREVET EUROPEEN

(11) **EP 0 975 816 B1**
(45) Date de publication et mention de la délivrance du brevet: **18.07.2001**
(21) Numéro de dépôt: 98920614.9
(22) Date de dépôt: 10.04.1998
(51) Int. Cl.: C22B 7/02

(54) **PROCEDE DE RECYCLAGE DE DECHETS DE FONDERIES DE LAITONS**
VERFAHREN ZUM WIEDERVERWERTEN VON ABFALLSTOFFEN DER MESSINGGIESSEREIEN
METHOD FOR RECYCLING BRASS FOUNDRY WASTE

(30) Priorité: 17.04.1997 FR 9704987
(43) Date de publication de la demande: 02.02.2000
(73) Titulaire: TREFIMETAUX, 92400 Courbevoie (FR)
(72) Inventeur: WELTER, Jean-Marie, F-27140 Gisors (FR); REVET, Florence, F-60590 Serifontaine (FR)
(74) Mandataire: Pigasse, Daniel
(86) Numéro de dépôt international: FR9800738
(87) Numéro de publication internationale: WO9848065

(56) Documents cités:
- BE-A- 562 488
- BE-A- 630 047
- DE-C- 651 529
- US-A- 3 909 243
- H. MOESTA: "Erze und Metalle - ihre Kulturgeschichte im Experiment" 1983 , SPRINGER-VERLAG , BERLIN HEIDELBERG NEW YORK XP002051674 * page 71 - 75 * * page 72, Versuch 14: Messing *
- N. N.: "GMELINS HANDBUCH DER ANORGANISCHEN CHEMIE, KUPFER TEIL A - LIEFERUNG 1, SYSTEM-NUMMER 60" 1955 , 8. AUFLAGE, VERLAG CHEMIE, GMBH , WEINHEIM, DE XP002051675 voir page 21-22
- HANS GROTHE: "Über die Herstellung von Messing nach dem alten Galmeiverfahren" ERZMETALL, vol. 24, no. 12, 1971, STUTTGART, DE, pages 587-592, XP002051673

## Description

### DOMAINE DE L'INVENTION

L'invention concerne le domaine du recyclage des déchets des fonderies de laitons. Plus particulièrement, l'invention est relative à un procédé de recyclage pyrométallurgique des crasses et poussières riches en zinc, mais contenant également du cuivre, mettant en oeuvre une étape de compactage.

### ETAT DE LA TECHNIQUE

D'une part, on connaît déjà à l'heure actuelle des procédés pyrométallurgiques de traitement des déchets contenant du zinc, en grande partie sous forme d'oxyde. Ces procédés sont conçus essentiellement pour recycler les fines d'aciéries, riches en fer, ou encore les déchets ménagers, riches en chlore par exemple. Dans tous les cas, il y a une étape de réduction permettant de libérer le zinc sous forme vapeur. Cette réduction s'effectue soit totalement en phase solide, le matériau à traiter étant monté en température dans une atmosphère réductrice dans un four de frittage ou un four à lit fluidisé, soit avec une étape de préréduction en phase solide puis une étape de fusion, le matériau étant au préalable aggloméré sous forme de boulettes avec un agent réducteur et un flux puis introduit dans un haut-fourneau. Dans tous les cas, le zinc est récupéré par vaporisation et condensation, soit sous forme de zinc pur, soit sous forme de composés (oxydes, chlorures....). Ces procédés permettent en fait de séparer les divers éléments métalliques présents dans les déchets : fer, plomb, cadmium....

D'autre part, dès l'antiquité, la calamine, minerai de zinc contenant de la blende (ZnS), du carbonate de zinc (ZnCO₃) et de l'oxyde de zinc (ZnO) a été utilisée pour élaborer des laitons. Pour cela, le procédé de cémentation, dit « procédé de la calamine » était employé. Ce procédé est d'abord décrit par Pseudo-Aristote en 300 av. J.C., dans « Mirabiles Auscultationes », puis par Pline et Discoride au premier siècle après J. C.

Dans ce procédé, la calamine, finement broyée, est mélangée à du charbon de bois moulu. Un liant organique (urine, eau de riz, résine, suif, sel...) est ajouté et la préparation est généralement agglomérée en boulettes. Les anciens faisaient ensuite réagir ce mélange avec du cuivre pur divisé pendant des temps très longs : de 8 à 24 heures. On obtenait ainsi un laiton contenant typiquement moins de 30% de zinc. Ce procédé n'est plus utilisé depuis le début du siècle dernier, quand le laiton a été élaboré à partir de Cuivre et de Zinc métalliques. Des textes récents dans lesquels des auteurs, Rolandi et Scacciati (1956) ou Werner (1970) par exemples, ont essayé de simuler le procédé décrit auparavant, mettent en oeuvre des températures inférieures à 1050°C pour éviter les pertes par vaporisation du zinc. Ces essais à l'état solide constituent l'état de la technique.
Le brevet belge N°630047 décrit aussi un procédé d'obtention de laiton en introduisant un mélange d'oxyde de zinc et de poudre de carbone dans un bain liquide de cuivre.

### PROBLEME POSE

Les déchets de fonderie de laitons ont deux origines. La première est la formation, en surface du bain liquide dans les fours, de crasses contenant jusqu'à 60% en poids de Zn et plus de 10% de Cu. Ces crasses sont actuellement broyées sur les sites de production et puis séparées selon la granulométrie. Les fractions de forte taille, riches en Cuivre, sont recyclées sur place. Par contre celles de faible granulométrie, appelées « fines », et pauvres en Cuivre, sont envoyées et traitées dans des entreprises spécialisées. La seconde origine est la récupération, dans les filtres des systèmes d'aspiration des fonderies, des poussières, appelées « flue-dust », qui sont essentiellement constituées d'oxyde de zinc, jusqu'à 80% en poids de Zn, et qui contiennent de 2 à 20% de Cu. Ces poussières sont également traitées sur des sites spécialisés.

Cependant, ces déchets non récupérables par les fonderies qui les engendrent, ne sont pas assez riches en cuivre pour intéresser les filières de récupération de cuivre, et sont par ailleurs trop chargés en cuivre pour les filières classiques de recyclage de déchets chargés en zinc. Il devient donc de plus en plus difficile de trouver des industries intéressées par leur récupération. Par ailleurs, les sites de traitement utilisent dans la plupart des cas des procédés hydrométallurgiques générant des effluents très nocifs pour l'environnement. Enfin, ces fines et flue-dust nécessitent de plus en plus des précautions particulières pour le transport (matières pulvérulentes et polluantes), compte tenu des réglementations qui se durcissent. Cela est d'autant plus gênant que les unités de traitement sont souvent dans un autre pays et qu'en conséquence plusieurs types de législations doivent s'appliquer, engendrant des demandes d'autorisation diverses.

La demanderesse a donc recherché et mis au point un procédé permettant
- de recycler de manière économique et écologique les fines et flue-dust générées par les fonderies de laitons,
- de pouvoir, de préférence, effectuer ce recyclage sur le site de production du déchet, de manière à s'affranchir des risques de transport sur de longs trajets,
- de réutiliser les déchets dans l'élaboration de laitons.

### OBJET DE L'INVENTION

L'invention a pour objet un procédé de recyclage des déchets (crasses, flue-dust, ...) générés dans les fonderies de laitons qui permet la récupération des métaux contenus dans ces déchets (Cu, Zn) sur le site où ces déchets sont formés, et leur réinjection dans le processus d'élaboration de laitons.

### DESCRIPTION DE L'INVENTION

Dans le procédé selon l'invention de recyclage de déchets solides (24), typiquement des crasses et fumées, riches en Zn sous forme d'oxyde essentiellement, et contenant des oxydes de Cu et des impuretés habituelles des laitons, générés dans les fonderies de laitons :
a) lesdits déchets (24) sont mélangés à un agent réducteur (25) à l'état solide divisé,
b) ledit mélange est compacté en agglomérats,
c) lesdits agglomérats sont introduits dans un réacteur de traitement (2) contenant un bain de métal liquide (15) de cuivre ou de laiton, où ils subissent une réduction,
d) après réduction desdits déchets, un nouveau laiton est formé et les déchets générés (22) dans le réacteur de traitement sont séparés,
Ce procédé est caractérisé en ce que,
- à l'étape a), lesdits déchets (24) sont mélangés à un agent réducteur (25) à l'état solide divisé et à un liant (26),
- à l'étape b), ledit mélange (20) est compacté en agglomérats (21) à porosité ouverte, lesdits agglomérats étant formés de manière à ce que, à l'étape c) qui suit, ils conservent leur intégrité durant la réduction dudit oxyde, et qu'ils permettent la diffusion dudit métal liquide,
- il comprend éventuellement une étape e) dans laquelle ledit nouveau laiton, liquide, est alors transféré dans un four (3) de fusion et de coulée, où la composition dudit laiton peut éventuellement être ajustée en Zn ou en tout autre élément d'alliage (Pb, Sn, Ni, ...) nécessaire à l'obtention du produit visé et les déchets générés au niveau de ce four sont séparés et récupérés,
- il comprend éventuellement une étape f) dans laquelle le laiton à composition éventuellement ajustée est alors coulé par un procédé permettant l'obtention de plateaux, de billettes, de fils, de pièces et produits de dimensions souhaitées,
- il comprend une étage g) dans laquelle lesdits déchets récupérés aux étapes d et e sont récupérés et recyclés selon les étapes a à f.

Les étapes critiques du procédé sont les étapes a à c, en particulier la formation d'agglomérats à porosité ouverte comprenant lesdits déchets, un agent réducteur et un liant.
Les essais entrepris par la demanderesse ont montré la nécessité d'avoir cette combinaison de moyens essentiels.
En effet, elle a notamment entrepris des essais de recyclage desdits déchets directement avec un agent réducteur, dans un bain de métal liquide, et cela, sans former d'agglomérats. Dans ce cas, le rendement des essais, donc le taux de récupération de Zn et Cu contenu dans lesdits déchets, était très faible, contrairement au cas des essais selon l'invention.
On suppose que les rendements élevés obtenus avec le procédé selon l'invention sont dus à plusieurs facteurs :
- les agglomérats formés, contrairement à un simple mélange de poudres qui serait introduit dans ledit métal liquide, constituent un mélange intime des réactifs (oxydes à traiter de Cu et Zn, agent réducteur et agent accélérateur liant),
- ces agglomérats se maintiennent en tant qu'agglomérats grâce au liant dans ledit bain liquide, au moins durant le temps nécessaire à la réduction des oxydes de Cu et Zn par ledit agent réducteur,
- la mise en contact du zinc vapeur formé, avec le cuivre liquide conduisant à la formation d'un laiton pouvant contenir jusqu'à au moins 35 % de zinc, est optimisée grâce à la porosité ouverte des agglomérats qui permet l'infiltration du cuivre liquide au coeur des agglomérats et une surface d'échange maximale,
- enfin les agglomérats formés peuvent être facilement maintenus au contact dudit métal liquide, contrairement à un simple mélange de poudres qui à tendance à remonter et à flotter à la surface dudit métal liquide.

Il est important de noter que le procédé de traitement du minerai de zinc (la calamine) de l'antiquité était connu pour être très lent, puisque la durée de traitement pouvait atteindre 24 h.
Par comparaison, le procédé de recyclage selon l'invention est relativement rapide.
En outre, il convient de noter que le procédé selon l'invention permet d'obtenir des laitons pouvant contenir jusqu'à au moins 35 % de zinc en poids, alors que la procédé à la calamine ne semblait pas permettre la formation d'un laiton à plus de 30 % de zinc en poids.
D'après les études de la demanderesse il semble avantageux :
- d'introduire les agglomérats dans du cuivre ou du laiton liquide afin de réduire le temps du cycle et limiter les pertes de zinc par vaporisation, plutôt que d'amener du cuivre ou du laiton solide et des agglomérats ensuite à température,
- de dissocier le four de fusion du cuivre ou de laiton et le réacteur de traitement qui n'utilisent pas nécessairement la même technologie, le réacteur, compte tenu de la rapidité de la réaction dans le cadre de l'invention, permettant un fonctionnement en continu ou semi-continu,
- de pouvoir, dans le cas d'un bain de cuivre, accompagner sa fusion et/ou la faire suivre par un traitement d'affinage pyrométallurgique, ce qui permettrait d'enfourner des matières secondaires de cuivre.
En conclusion, une telle approche permettrait de produire du laiton uniquement à partir de matières secondaires à recycler. Des impuretés mineures, Pb, Fe, Sn... ne sont pas gênantes car ce sont des éléments présents dans des teneurs variant entre 0.1 et 3 % poids dans les laitons de décolletage par exemple.
Le four de fusion et le réacteur de traitement peuvent être regroupés mais ce n'est pas la configuration idéale.
Le four de traitement est appelé réacteur de traitement car la réaction de réduction est exothermique, ce qui permet de limiter l'apport énergétique au niveau de ce réacteur, voire même de la supprimer. Ce sera d'autant plus facile que l'isolation thermique du réacteur sera bien adaptée.

### DESCRIPTION DES FIGURES

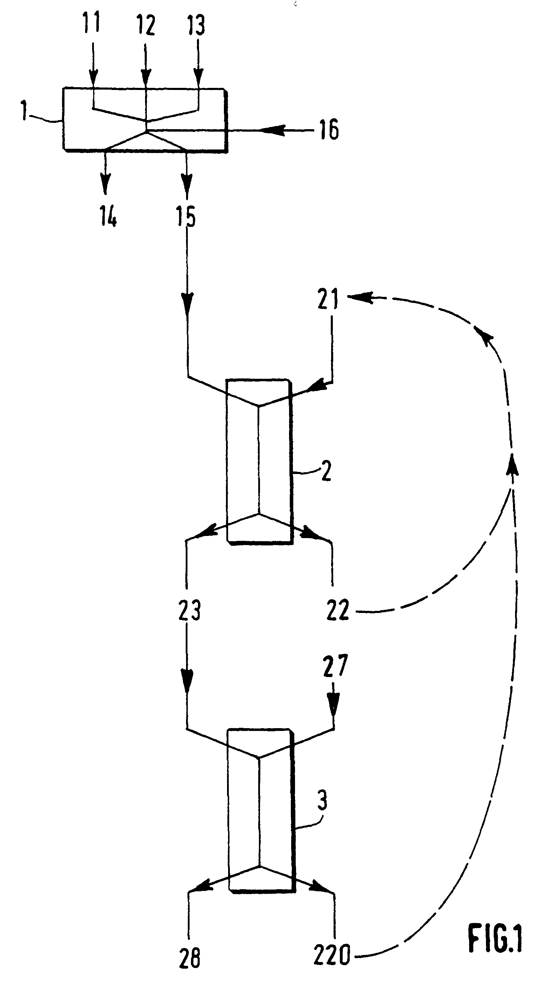

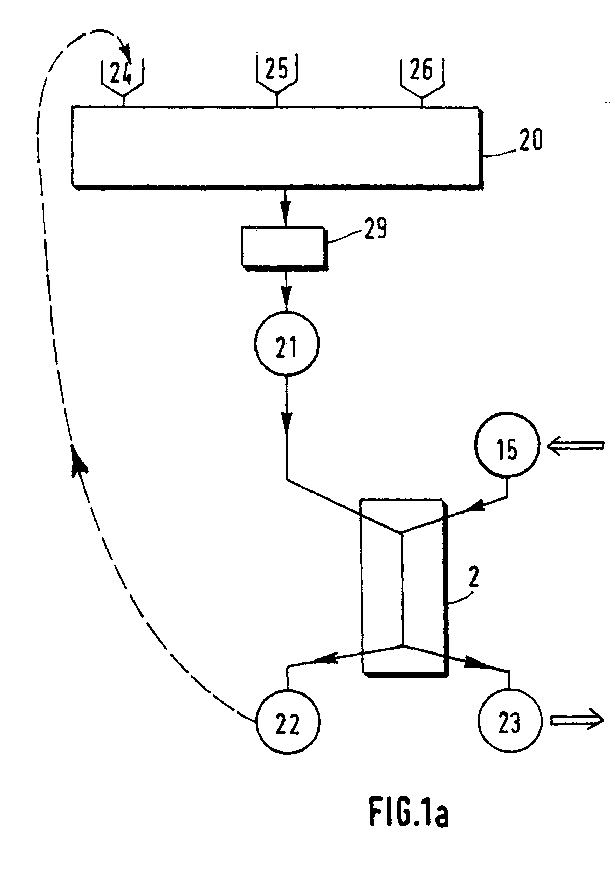

La figure 1 représente une vue schématique de la totalité d'une ligne d'affinage permettant le recyclage de déchets des fonderies de laiton selon l'invention.
La figure la représente une description symbolique des flux de matière intervenant dans une partie du procédé de recyclage.
Cette ligne est composée de 3 fours : un four de fusion de cuivre ou de laiton pouvant permettre un traitement pyrométallurgique d'affinage (1), un réacteur de traitement (2) et un four de maintien et de coulée (3).
Le four (1) et le réacteur (2) sont des équipements permettant des cinétiques d'échange massique et thermiques optimum, grâce par exemple à un brassage important des charges avec création à tout instant de surfaces d'échange "fraîches". Les techniques des fours rotatifs, pneumatiques, ou bien des fours équipés de systèmes de brassages électromagnétique, sont bien adaptées. La charge (11) du four (1) est constituée majoritairement de déchets. Une injection de gaz oxydant (12), air ou air + oxygène, ainsi que l'ajout d'un laitier (13) sont possibles pour former un bain de cuivre oxydé. Il y a un système de décrassage pour séparer métal liquide (15) et crasses (14).
Le métal liquide (15) est transféré du four (1) au réacteur (2) de traitement dont l'atmosphère peut être contrôlée. Lorsque le métal liquide est un cuivre oxydé, l'injection d'un désoxydant (16) dans le four (1) avant le transfert permet de contrôler le niveau d'oxydation du métal liquide. Dans le réacteur (2) est également introduit le mélange à traiter, sous forme d'agglomérés (21), mélange formé de trois composants : les déchets à recycler finement broyés (24) et contenant du zinc et du cuivre sous forme oxydée, un réducteur (25) en excès à l'état divisé, et un liant (26) ayant généralement une double fonction de stabilisateur mécanique assurant la cohésion desdits agglomérats, et celle d'accélérateur de la réaction de réduction.
Ce mélange (21), après avoir été aggloméré sous forme de boulettes, briquettes ou autre, est introduit au coeur du cuivre liquide (15). La réaction de réduction dans le réacteur (2) produit du laiton (23) pouvant contenir au-delà de 35 % de zinc en fonction du produit désiré, et des déchets (22), crasses et fumées qui sont ensuite traités à leur tour. Le laiton (23) est transféré dans un four de maintien et de coulée (3) pour former des produits en laiton (28), les déchets (220), crasses et fumées, étant également recyclées et traitées.
Sur la figure la est schématisée la formation d'agglomérés (21) à partir de mélange (20) de poussières et flue-dust à recycler (24), d'agent réducteur (25) et de liant (26) traité en agglomérateur (29), puis le traitement desdits agglomérats (21) au sein du réacteur de traitement (2) contenant du métal liquide (15), ce qui conduit à la formation d'un laiton (23), et de déchets à recycler (22).

La figure 2 représente, en coupe verticale, le réacteur de traitement (2) utilisé pour les essais. Il comprend un creuset (41), posé sur un support réfractaire (42), et disposé à l'intérieur d'un tube de protection (43), lui-même centré par rapport à l'inducteur (45) et à son capotage (44).

Dans le creuset, se trouvent le bain métallique de cuivre ou de laiton (15), des agglomérats (21) et une couverte de charbon de bois (47). Le creuset est recouvert d'un couvercle en matériau réfractaire (48). Les fumées sont captées par une hotte d'aspiration (49) et acheminées dans une gaine (50).

La figure 3 représente, en coupe, un agglomérat (46) comprenant ZnO+C (oxyde de zinc + agent de réduction) après une réaction de 15 minutes dans un bain de cuivre (15). Il est composé de quatre zones, avec, de l'intérieur vers l'extérieur :
- un noyau central (31), non encore modifié, de ZnO+C,
- une couche pulvérulente (32) de ZnO+C+Cu, le Cu (15) provenant du bain de métal liquide,
- une couche de laiton (33) formé durant les 15 minutes de réduction,
- et, enfin, une couche externe de cuivre (34).

### DESCRIPTION DETAILLEE DE L'INVENTION

Selon l'invention, lesdits déchets solides (24) peuvent contenir des teneurs variables en Zn et Cu : 10 à 95 % de Zn, 2 à 60 % de Cu. Deux familles de déchets sont ici concernées :
a - la fraction fine des crasses, avec une teneur pondérale en Zn préférentiellement comprise entre 20 et 60 %, et une teneur pondérale en Cu préférentiellement comprise entre 5 et 20 %,
b - les fumées (flue-dust), avec une teneur pondérale en Zn préférentiellement comprise entre 50 et 80 %, et une teneur pondérale en Cu préférentiellement comprise entre 2 et 10 %.

Les teneurs indiquées précédemment ne sont pas limitées par des considérations techniques liées au procédé selon l'invention ; elles correspondent simplement aux teneurs en zinc et cuivre rencontrées habituellement dans les crasses et fumées à recycler.

Cependant, il est clair que, dans le cas de déchets à faible teneur en zinc et cuivre, le recyclage de tels déchets peut être faisable techniquement par le procédé selon l'invention, mais en pratique peu rentable sur le plan économique.
Selon l'invention, ledit mélange (20) défini à l'étape a) du procédé comprend la quantité d'agent réducteur (25) au moins nécessaire à la réduction des oxydes de Cu et Zn contenus dans lesdits déchets (24).
Ledit mélange (20) comprend la quantité de liant nécessaire et suffisante pour obtenir un agglomérat solide manipulable (21). Généralement, ledit liant est un produit liquide, éventuellement à forte viscosité, à la température à laquelle sont formés lesdits agglomérats (21), par compactage dudit mélange (20) sous forme de boulettes, briquettes ou autres formes.
Ledit liant (26) peut être choisi pour, outre son action de stabilisation et de cohésion mécanique desdits agglomérats, une action de catalyseur pour accélérer ladite réduction à l'étape c) du procédé.
A titre indicatif, ledit liant (26) peut être choisi parmi :
- un liquide polaire, de préférence de l'eau,
- une solution, ou une émulsion, ou une dispersion d'un liquide polaire, de préférence de l'eau, avec un ou plusieurs composés choisis parmi : les acides gras ou leurs sels, les bases alcalines et alcalino-terreuses (soude, potasse, chaux, ....), le sucre, l'amidon,
- un hydrocarbure liquide ou solide, une résine organique ou un brai à teneur élevée en carbone.
De préférence, on utilise les bases alcalines ou alcalino-terreuses qui ont l'avantage de présenter une action de catalyseur accélérant la réaction de réduction des oxydes de cuivre et de zinc.

Selon l'invention, ledit agent réducteur (25) contient du carbone et est choisi parmi le charbon de bois, le coke, le noir de fumée, le noir de carbone, le graphite, et, si nécessaire, concassé pour être à l'état solide divisé. Cet agent réducteur (25) a un rôle de carburant, ce qui permet de limiter l'apport d'énergie extérieure au réacteur (2).

Typiquement, ledit agglomérat (21) comprend, en poids, de 40 à 70 % de déchets (24), de 15 à 50 % d'agent réducteur (25), de 5 à 35 % de liant (26).

Il peut être avantageux selon l'invention que lesdits agglomérats (21) subissent, durant la phase d'agglomération, un traitement thermique avant d'être introduits dans ledit réacteur de traitement (2), de manière à :
- éliminer l'eau, à une température supérieure à 100°C, éventuellement contenue dans ledit liant (26) et/ou ledit agent réducteur (25),
- décomposer jusqu'à une température voisine de 400°C la partie dudit liant (26) et/ou dudit agent réducteur (25) décomposable à cette température,
- et fritter l'agglomérat (21) et renforcer sa tenue, sa cohésion mécanique, à une température voisine de 400 °C.
De préférence, ledit traitement thermique est choisi en température et en durée, de manière à obtenir un agglomérat (21) à porosité ouverte qui permette la réduction des oxydes contenus dans lesdits déchets (24) au coeur du métal liquide (15), et le captage direct, par ledit métal liquide (15) qui s'est infiltré à coeur dudit agglomérat (21), du zinc formé.
Ledit métal liquide (15) peut être choisi parmi : un cuivre, éventuellement oxydé, un laiton CuZn avec un titre en Zinc inférieur au titre final visé.
Ledit métal liquide (15) contenu dans ledit réacteur de traitement (2) à l'étape c) du procédé, peut être introduit dans ledit four à l'état liquide et sous forme oxydé lorsqu'il s'agit de cuivre.
Ledit métal liquide est préparé dans un four d'affinage (1) en charge sur ledit réacteur de traitement (2).
Lesdits agglomérats (21) peuvent être injectés dans ledit réacteur de traitement (2) en chute ou de manière pneumatique, si le four est à induction ou du type cubilot. Les agglomérats peuvent également être introduits à travers les électrodes dans le cas d'un four à arc.
Un accessoire permettant le brassage du contenu du réacteur de traitement (2) peut être ajouté afin d'accélérer les cinétiques de réactions.

Généralement, ledit métal liquide (15) et lesdits agglomérats (21) sont recouverts d'une couverte (48) de charbon de bois ou d'un flux adapté pour :
a - réduire les pertes en zinc,
b - affiner le laiton formé,
c - accélérer les réactions en déplaçant les équilibres thermodynamiques.

Selon une modalité de l'invention, on peut choisir ledit liant (26) de manière à ce qu'il soit aussi ledit agent réducteur (25), un même produit assurant les fonctions distinctes dudit liant et dudit agent réducteur, par exemple en utilisant un brai ou un goudron.

Un autre objet de l'invention est constitué par les produits obtenus avec un laiton préparé suivant le procédé décrit précédemment.

### EXEMPLES DE REALISATION

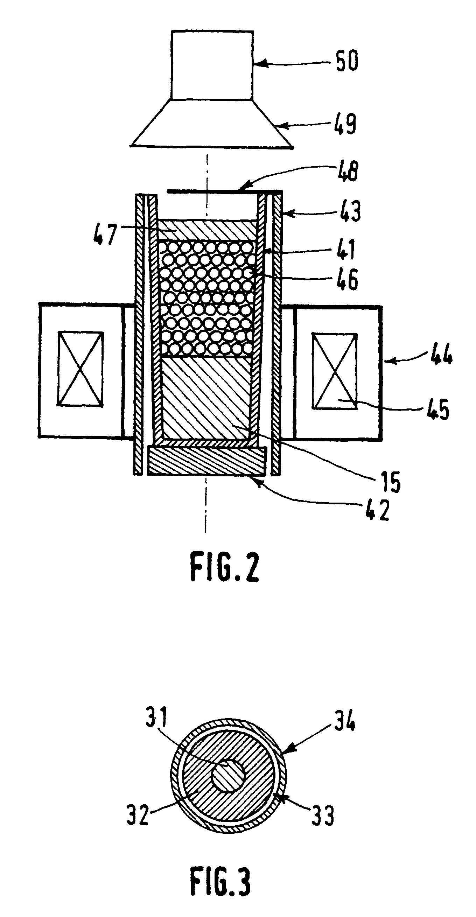

Tous les essais ont été réalisés dans le réacteur de traitement (2) représenté et décrit à la figure 2, d'une capacité maximale de 10 kg (masse de laiton pouvant être fabriquée à chaque essai).
Les essais ont été réalisés à partir de déchets (24) constitués soit de crasses (C) soit de fumées (F).
Les crasses (C) présentaient une teneur en Zn de 40 % et en Cu de 10 %.
Les fumées (F) présentaient une teneur en Zn de 70 % et en Cu de 2 %.

Les agglomérats (21) ont été formés en malaxant lesdits déchets (24) en présence dudit liant (26) et dudit agent réducteur (25) et en passant la masse de mélange malaxée dans un granulateur formant des agglomérats sensiblement sphériques de 5 à 20 mm de diamètre, ou également en extrudant le mélange malaxé sous forme de granulats cylindriques de quelques centimètres de longueur et de diamètre. Les agglomérats formés (21) ont une porosité ouverte.
Dans tous les cas, l'agent réducteur (25) était constitué de charbon de bois finement divisé (particules typiquement inférieures à 0,5 mm).

Le liant (25) était constitué par de l'eau pour les essais 1 à 3, une solution aqueuse de soude à 10% pour les essais 4 à 6 (notée + dans le tableau ci-après), avec en plus, dans le cas de l'essai 6, 2% en poids de sucre (saccharose, noté ++ dans le tableau ci-après). La porosité des agglomérats prêts à l'utilisation variait entre 40 et 75 %.

Ces agglomérats ont été séchés dans un four à une température de 125°C pour éliminer toute l'eau apportée par ledit liant, puis introduits pneumatiquement dans le four de traitement (2) contenant ledit bain métallique (15) surmonté d'une couverte de charbon de bois.

| ESSAIS n° | 1 | 2 | 3 | 4 | 5 | 6 |
|---|---|---|---|---|---|---|
| **Bain métallique** | cuivre | laiton | laiton | cuivre | laiton | cuivre |
| (15) | Cu | CuZn10 | CuZn25 | Cu | CuZn25 | Cu |
| Masse (kg) | 4,2 | 4,7 | 5,6 | 4,2 | 5,6 | 1,6 |
| Température (°C) | 1100 | 1060 | 1000 | 1090 | 970 | 1085 |

| **Agglomérat (21)** | | | | | | |
|---|---|---|---|---|---|---|
| Déchet (24) | F | F | F | F | F | C |
| Liant (26) | eau | eau | eau | eau + | eau + | eau ++ |
| **Durée de traitement** | 4h | 1h | 2h30 | 1h45 | 1h30 | 1h40 |

| **Alliage obtenu** | | | | | | |
|---|---|---|---|---|---|---|
| Masse (kg) | 5,2 | 5,8 | 5,7 | 6,3 | 6,2 | 2,1 |
| % de Zn | 23,3 | 21,6 | 29,4 | 34,3 | 34,2 | 18,0 |
| Rendement essai % | 60,8 | 52,9 | 68,7 | 78,7 | 80,9 | 45 |

Ces essais ont donc montré que :
- le recyclage des déchets (fumées et crasse) des fonderies de laitons est possible,
- le laiton obtenu peut contenir plus de 30 % en masse de Zn,
- le recyclage est possible avec un bain métallique de cuivre pur ou de laiton,
- la présence de NaOH dans le liant améliore le rendement du recyclage (comparaison de l'essai 4 avec l'essai 1, et de l'essai 5 avec l'essai 3).
Pour les essais avec la soude, l'analyse du laiton obtenu et des crasses formées au cours de ces essais a montré que le sodium se trouve en totalité dans les crasses. Il n'y a donc pas de contre-indication à l'utilisation du laiton obtenu selon le procédé de l'invention.

Durant ces essais, des analyses des gaz en CO et CO₂ ont été effectuées sur des prélèvements de fumées. Ces analyses ont confirmé que la réaction de réduction des déchets se déroulait, et ont permis d'établir que l'équilibre thermodynamique était atteint. Au cours de ces essais, des agglomérats typiquement sphériques ont été prélevés du réacteur de traitement (2) pour analyse de l'avancement de la réduction des déchets. On a obtenu, en coupe, différentes zones comme représenté et décrit à la figure 3, correspondant à 15 min. de traitement à l'essai 4.
Ces différentes zones mettent en évidence la diffusion du cuivre venant du bain métallique à l'intérieur des agglomérats en cours de traitement (46), allant à la rencontre du zinc gazeux produit localement. C'est la raison pour laquelle, afin de faciliter ce phénomène, il est nécessaire que l'agglomérat ait une porosité ouverte.

### ESSAIS COMPARATIFS

Des essais comparatifs ont été réalisés, mais sans liant. Dans ces essais, on a mélangé les déchets et la quantité correspondante d'agent réducteur, et ce mélange a été introduit dans un bain de métal liquide.
On n'a ainsi obtenu qu'un faible rendement de récupération (rendement inférieur à 15% en poids), et avec formation de laitons peu chargés en zinc.
Ces essais montrent donc la nécessité de former des agglomérats de déchets et d'agent réducteur, agglomérats qui doivent conserver leur intégrité durant la période de formation du laiton.

### AVANTAGES DE L'INVENTION

Le procédé de recyclage des déchets des fonderies de laitons présente des avantages certains par rapport aux filières classiques utilisées à ce jour. Ces avantages sont les suivants :
- le procédé selon l'invention est un procédé de recyclage pyrométallurgique dont les déchets sont auto-recyclables - du moins tant que la teneur en Cu / Zn de ces déchets justifie un recyclage économique, à comparer aux procédés hydrométallurgiques classiques qui produisent des effluents liquides très difficiles à maîtriser et coûteux à retraiter,
- ce procédé permet de traiter les déchets sur le site même de leur production, donc élimine le problème du transport de matières dangereuses ou potentiellement polluantes,
- enfin, ce procédé s'insère naturellement dans une ligne d'élaboration de laiton.

Le procédé selon l'invention est donc un procédé de recyclage particulièrement économique (récupération des métaux présents dans les déchets, limitation des coûts de transport et de stockage, etc...) et écologique des déchets (crasses et fumées) produits par les fonderies de laitons.

## Revendications

1. Procédé de recyclage de déchets solides (24), typiquement des crasses et fumées, riches en Zn sous forme d'oxyde essentiellement, et contenant des oxydes de Cu et des impuretés habituelles des laitons, générés dans les fonderies de laitons, dans lequel :
a) lesdits déchets (24) sont mélangés à un agent réducteur (25) à l'état solide divisé,
b) ledit mélange est compacté en agglomérats,
c) lesdits agglomérats sont introduits dans un réacteur de traitement (2) contenant un bain de métal liquide (15) de cuivre ou de laiton, où ils subissent une réduction,
d) après réduction desdits déchets, un nouveau laiton est formé et les déchets générés (22) dans le réacteur de traitement sont séparés,
caractérisé en ce que,
- à l'étape a), lesdits déchets (24) sont mélangés à un agent réducteur (25) à l'état solide divisé et à un liant (26),
- à l'étape b), ledit mélange (20) est compacté en agglomérats (21) à porosité ouverte, lesdits agglomérats étant formés de manière à ce que, à l'étape c) qui suit, ils conservent leur intégrité durant la réduction dudit oxyde, et qu'ils permettent la diffusion dudit métal liquide,
- il comprend éventuellement une étape e) dans laquelle ledit nouveau laiton, liquide, est alors transféré dans un four (3) de fusion et de coulée, où la composition dudit laiton peut éventuellement être ajustée en Zn ou en tout autre élément d'alliage par exemple Pb, Sn, Ni, nécessaire à l'obtention du produit visé et les déchets générés au niveau de ce four sont séparés et récupérés,
- il comprend éventuellement une étape f) dans laquelle le laiton à composition éventuellement ajustée est alors coulé par un procédé permettant l'obtention de plateaux, de billettes, de fils, de pièces et produits de dimensions souhaitées,
- il comprend une étage g) dans laquelle lesdits déchets récupérés aux étapes d) et e) sont récupérés et recyclés selon les étapes a) à f).

2. Procédé selon la revendication 1 dans lequel lesdits déchets solides (24) contiennent des teneurs variables en Zn et Cu : 10 à 95 % de Zn, 2 à 60 % de Cu, deux familles de déchets étant ici concernées :
a - la fraction fine des crasses après broyage, avec une teneur pondérale en Zn préférentiellement comprise entre 20 et 60 %, et une teneur pondérale en Cu préférentiellement comprise entre 5 et 20 %,
b - les fumées (flue-dust), avec une teneur pondérale en Zn préférentiellement comprise entre 50 et 80 %, et une teneur pondérale en Cu préférentiellement comprise entre 2 et 10 %.

3. Procédé selon la revendication 2 dans lequel ledit mélange (20) défini à l'étape a) du procédé comprend la quantité d'agent réducteur (25) au moins nécessaire à la réduction des oxydes de Zn et Cu contenus dans lesdits déchets (24).

4. Procédé selon la revendication 3 dans lequel ledit mélange (20) comprend la quantité de liant nécessaire et suffisante pour obtenir un agglomérat solide manipulable (21).

5. Procédé selon la revendication 4 dans lequel ledit liant (26) est choisi pour, outre son action de stabilisation et de cohésion mécanique desdits agglomérats, une action de catalyseur pour accélérer ladite réduction à l'étape c) du procédé.

6. Procédé selon la revendication 5 dans lequel ledit liant (26) est choisi parmi :
- un liquide polaire, de préférence de l'eau,
- une solution, ou une émulsion, ou une dispersion d'un liquide polaire, de préférence de l'eau, avec un ou plusieurs composés choisis parmi : les acides gras ou leurs sels, les bases alcalines et alcalino-terreuses (soude, potasse, chaux, ....), le sucre, l'amidon,
- un hydrocarbure liquide ou solide, une résine organique ou un brai à teneur élevée en carbone.

7. Procédé selon une quelconque des revendications 1 à 6 dans lequel ledit agent réducteur (25) contient du carbone et est choisi parmi le charbon de bois, le coke, le noir de fumée, le noir de carbone, le graphite, et, si nécessaire, concassé pour être à l'état solide divisé.

8. Procédé selon une quelconque des revendications 1 à 7 dans lequel ledit agglomérat (21) comprend, en poids, de 40 à 70 % de déchets (24), de 15 à 50 % d'agent réducteur (25), de 5 à 35 % de liant (26).

9. Procédé selon une quelconque des revendications 1 à 8 dans lequel lesdits agglomérats (21) subissent un traitement thermique avant d'être introduits dans ledit réacteur de traitement (2), de manière à :
- éliminer l'eau, à une température supérieure à 100°C, éventuellement contenue dans ledit liant (26) et/ou ledit agent réducteur (25),
- décomposer jusqu'à une température voisine de 400°C la partie dudit liant (26) et/ou dudit agent réducteur (25) décomposable à cette température,
- fritter l'agglomérat (21) et renforcer sa tenue, sa cohésion mécanique, à une température voisine de 400 °C,
- et ainsi obtenir la porosité ouverte souhaitée.

10. Procédé selon la revendication 9 dans lequel ledit traitement thermique est choisi en température et en durée, de manière à obtenir un agglomérat (21) avec un taux de porosité qui permette la réduction des oxydes contenus dans lesdits déchets (24) au coeur du métal liquide (15), et le captage direct, par ledit métal liquide (15) qui s'est infiltré à coeur dudit agglomérat (21), de la vapeur de Zn formée.

11. Procédé selon une quelconque des revendications 1 à 10 dans lequel ledit métal liquide (15) peut être choisi parmi : un cuivre, un cuivre oxydé, un laiton CuZn avec un titre en Zinc inférieur au titre final visé.

12. Procédé selon la revendication 11 dans lequel ledit cuivre oxydé (15) est préparé dans un four d'affinage (1) en charge sur ledit réacteur de traitement (2).

13. Procédé selon une quelconque des revendications 1 à 12 dans lequel lesdits agglomérats (21) sont injectés dans ledit réacteur de traitement (2) en chute ou de manière pneumatique, si le four est à induction ou du type cubilot. Les agglomérats peuvent également être introduits à travers les électrodes dans le cas d'un four à arc.

14. Procédé selon une quelconque des revendications 1 à 13 dans lequel un accessoire permettant le brassage du contenu du réacteur de traitement (2) peut être ajouté afin d'accélérer les cinétiques de réactions.

15. Procédé selon une quelconque des revendications 1 à 14 dans lequel ledit métal liquide (15) et lesdits agglomérats (21) sont recouverts d'une couverte (48) de charbon de bois ou d'un flux adapté pour :
a - réduire les pertes en zinc,
b - affiner le laiton formé,
c - accélérer les réactions en déplaçant les équilibres thermodynamiques.

16. Procédé selon une quelconque des revendications 1 à 15 dans lequel ledit liant (26) peut également être ledit agent réducteur (25), un même produit pouvant assurer les fonctions distinctes dudit liant et dudit agent réducteur.

## Patentansprüche

1. Verfahren zum Wiederverwerten fester Abfallstoffe (24), typischerweise Gekrätz und Rauch, die einen hohen Zinkgehalt im wesentlichen in Form von Oxid aufweisen und Cu-Oxide sowie übliche Verunreinigungen der Messinge enthalten und in Messinggießereien entstehen, bei dem:
a) die Abfallstoffe (24) einem Reduktionsmittel (25) zugemischt werden, das im geteilten festen Zustand vorliegt,
b) das Gemisch zu Aggregaten verpresst wird,
c) die Aggregate in einen ein Flüssigmetallbad (15) aus Kupfer oder Messing enthaltenden Behandlungsreaktor (2) eingebracht werden, wo sie einer Reduktion unterworfen werden,
d) nach der Reduktion der Abfallstoffe ein neues Messing gebildet wird und die im Behandlungsreaktor entstandenen Abfallstoffe (22) getrennt werden,
dadurch gekennzeichnet, dass
- im Schritt a) die Abfallstoffe (24) einem im geteilten festen Zustand vorliegenden Reduktionsmittel (25) und einem Bindemittel (26) zugemischt werden,
- im Schritt b) das Gemisch (20) zu Aggregaten (21) mit offener Porosität verpresst wird, wobei die Aggregate so gebildet werden, dass sie im nachfolgenden Schritt c) während der Reduktion des Oxids unversehrt bleiben und die Diffusion des Flüssigmetalls ermöglichen,
- es eventuell einen Schritt e) umfasst, in welchem dem das neue, flüssige Messing dann in einen Schmelz- und Gießofen (3) überführt wird, wo die Zusammensetzung des Messings in Bezug auf Zn oder jedes andere für die Gewinnung des angestrebten Produkts notwendige Legierungsbestandteil wie Pb, Sn, Ni eventuell eingestellt werden kann, und die im Bereich dieses Ofens entstandenen Abfallstoffe getrennt und zurückgewonnen werden,
- es eventuell einen Schritt f) umfasst, in welchem das Messing mit der eventuell eingestellten Zusammensetzung durch ein Verfahren, das die Herstellung von Platten, Barren, Drähten, Werkstücken und Produkten mit den gewünschten Abmessungen ermöglicht, gegossen wird,
- es einen Schritt g) umfasst, in welchem die in den Schritten d) und e) zurückgewonnenen Abfallstoffe nach den Schritten a) bis f) zurückgewonnen und wiederverwertet werden.

2. Verfahren nach Anspruch 1, bei dem die festen Abfallstoffe (24) variable Zn- und Cu-Gehalte enthalten: 10 bis 95 % Zn, 2 bis 60 % Cu, wobei hier zwei Familien von Abfallstoffen betroffen sind:
a - der Feinstanteil des Gekrätz nach dem Mahlen, mit einem Gewichtsanteil an Zn von vorzugsweise 20 bis 60 % und einem Gewichtsanteil an Cu von vorzugsweise 5 bis 20 %,
b - der Rauch (flue-dust) mit einem Gewichtsanteil an Zn von vorzugsweise 50 bis 80 % und einem Gewichtsanteil an Cu von vorzugsweise 2 bis 10 %.

3. Verfahren nach Anspruch 2, bei dem das im Schritt a) des Verfahrens definierte Gemisch (20) die Menge Reduktionsmittel (25) aufweist, die mindestens für die Reduktion der in den Abfallstoffen (24) enthaltenen Zn- und Cu-Oxide notwendig ist.

4. Verfahren nach Anspruch 3, bei dem das Gemisch (20) die zur Herstellung eines handhabbaren festen Aggregats (21) notwendige und ausreichende Bindemittelmenge aufweist.

5. Verfahren nach Anspruch 4, bei dem das Bindemittel (26), außer seiner Wirkung auf die Stabilisation und den mechanischen Zusammenhalt der Aggregate, wegen einer katalytischen Wirkung ausgewählt wird, um den Reduktionsvorgang im Verfahrensschritt c) zu beschleunigen.

6. Verfahren nach Anspruch 5, bei dem das Bindemittel (26) ausgewählt wird unter:
- einer polaren Flüssigkeit, vorzugsweise Wasser,
- einer Lösung oder einer Emulsion oder einer Dispersion einer polaren Flüssigkeit, vorzugsweise Wasser, mit einer oder mehreren Verbindungen ausgewählt unter den Fettsäuren oder ihren Salzen, den Alkali- und Erdalkalibasen (Soda, Kali, Kalk, ...), Zucker, Stärke,
- einem flüssigen oder festen Kohlenwasserstoff, einem organischen Harz oder einem Pech mit hohem Kohlenstoffgehalt.

7. Verfahren nach einem der Ansprüche 1 bis 6, bei dem das Reduktionsmittel (25) Kohlenstoff enthält und unter Holzkohle, Koks, Gasruß, Ruß, Graphit ausgewählt und wenn nötig grobgemahlen wird, um im geteilten festen Zustand vorzuliegen.

8. Verfahren nach einem der Ansprüche 1 bis 7, bei dem das Aggregat (21) bezogen auf die Masse 40 bis 70 % Abfallstoffe (24), 15 bis 50 % Reduktionsmittel (25), 5 bis 35 % Bindemittel (26) enthält.

9. Verfahren nach einem der Ansprüche 1 bis 8, bei dem die Aggregate (21), bevor sie in den Behandlungsreaktor (2) eingebracht werden, einer Wärmebehandlung unterworfen werden, um:
- bei einer Temperatur oberhalb 100°C das eventuell im Bindemittel (26) und/oder Reduktionsmittel (25) enthaltene Wasser zu entfernen,
- bis zu einer Temperatur nahe 400°C denjenigen Teil des Bindemittels (26) und/oder Reduktionsmittels (25) zu zersetzen, der bei dieser Temperatur zersetzbar ist,
- das Aggregat (21) bei einer Temperatur nahe 400°C zu sintern und seine Festigkeit, seinen mechanischen Zusammenhalt zu verstärken,
- und somit die gewünschte offene Porosität zu erhalten.

10. Verfahren nach Anspruch 9, bei dem die Wärmebehandlung temperatur-und zeitmäßig so gewählt wird, dass ein Aggregat (21) mit einem die Reduktion der in den Abfallstoffen (24) enthaltenen Oxide im Innern des Flüssigmetalls (15) ermöglichenden Porositätsgrad und die direkte Aufnahme des gebildeten Zinkrauchs durch das Flüssigmetall (15), das ins Innere des Aggregats (21) eingedrungen ist, erzielt wird.

11. Verfahren nach einem der Ansprüche 1 bis 10, bei dem das Flüssigmetall (15) ausgewählt werden kann unter: einem Kupfer, einem oxidierten Kupfer, einem CuZn-Messing mit einem geringeren Zinkgehalt als der angestrebte Endgehalt.

12. Verfahren nach Anspruch 11, bei dem das oxidierte Kupfer (15) in einem auf dem Behandlungsreaktor (2) unter Druck stehenden Raffinationsofen (1) hergestellt wird.

13. Verfahren nach einem der Ansprüche 1 bis 12, beim dem die Aggregate (21) absinkend oder pneumatisch in den Behandlungsreaktor (2) eingespritzt werden, wenn der Ofen ein Induktionsofen oder eine Art Kupolofen ist. Die Aggregate können im Falle eines Lichtbogenofens auch über die Elektroden eingeführt werden.

14. Verfahren nach einem der Ansprüche 1 bis 13, bei dem ein Zusatzgerät zum Durchmischen des Inhalts des Behandlungsreaktors (2) hinzugefügt werden kann, um die Reaktionskinetiken zu beschleunigen.

15. Verfahren nach einem der Ansprüche 1 bis 14, bei dem das Flüssigmetall (15) und die Aggregate (21) mit einer Abdeckmasse (48) aus Holzkohle oder einem geeigneten Flußmittel überdeckt sind, um:
a) - die Zinkverluste zu reduzieren
b) - das gebildete Messing zu raffinieren
c) - die Reaktionen durch Verlagerung der Temperaturgleichgewichte zu beschleunigen.

16. Verfahren nach einem der Ansprüche 1 bis 15, bei dem das Bindemittel (26) auch das Reduktionsmittel (25) sein kann, da ein- und dasselbe Produkt die verschiedenen Funktionen des Bindemittels und Reaktionsmittels zu gewährleisten vermag.

## Claims

1. Recycling process for zinc-rich solid waste (24), typically dross and flue-dust, mainly in oxide form, and containing Cu oxides and impurities normally present in brass and generated in brass foundries, in which :
a) the said waste (24) is mixed with a finely divided solid reducin agent (25);
b) the said mix is compacted in agglomerates ;
c) the said agglomerates are added into a treatment reactor (2) containing a bath of liquid copper or brass metal (15), where they are reduced;
d) after the said waste has been reduced, a new brass is formed and the waste (22) generated in the treatment reactor is separated and recovered
characterized in that,
- in step a), the said waste (24) is mixed with a reducing agent (25) in the divided solid state and a binder (26);
in step b), the said mix (20) is compacted into agglomerates (21) with open pores, the said agglomerates being formed such that in the following step c), they maintain their integrity throughout the reduction of the said oxide, and enable diffusion of the said liquid metal;
- it may comprise a step e) in which the new brass, liquid, is then transferred into a fusion and casting furnace (3), where the composition of the said brass may be adjusted in Zn if required or in any other alloy, for instance Pb, Sn, Ni, element necessary to obtain the required product and waste generated in this furnace is separated and recovered;
it may include a step f) in which the brass, possibly with an adjusted composition, is then cast by a process to obtain plates, billets, wires, parts and products of required dimensions ;
it comprises a step g) in which the said waste recovered in steps d) and e) is recovered and recycled according to step a) to f).

2. Process according to claim 1 in which the said solid waste (24) can contain variable contents of Zn and Cu, with 10 to 95% of Zn, and 2 to 60% of Cu two waste families being concerned here:
a) the fine fraction of dross after grinding with a content by weight of Zn preferably between 20 and 60%, and a content by weight of Cu preferably between 5 and 20%;
b) flue-dust with a content by weight of Zn preferably between 50 and 80%, and a content by weight of Cu preferably between 2 and 10%.

3. Process according to claim 2, in which the said mix (20) defined in step a) of the process comprises at least the quantity of reducing agent(25) necessary for reduction of Cu and Zn oxides contained in the said waste (24).

4. Process according to claim 3, in which the said mix (20) comprises the necessary and sufficient quantity of binder to obtain a solid easily handled agglomerate (21).

5. Process according to claim 4, in which the said binder (26) is chosen such that, apart from its action stabilizing and providing mechanical cohesion for the said agglomerates, it acts as a catalyst to accelerate the said reduction in step c) of the process.

6. Process according to claim 5, in which the said binder (26) is chosen from the following:
- a polar liquid, preferably water;
- a solution or an emulsion, or a dispersion of a polar liquid (preferably water) with one or several compounds chosen among fatty acids or salts of fatty acids, alkaline bases and alkaline earths (soda, potassium, lime, etc.), sugar and starch;
- a liquid or solid hydrocarbon, an organic resin or pitch with a high carbon content.

7. Process according to any one of claims 1 to 6, in which the said reducing agent (25) contains carbon and is chosen from charcoal, coke, smoke black, carbon black, graphite, and if necessary is crushed into the finely divided state.

8. Process according to any one of claims 1 to 7, in which the said agglomerate (21) comprises 40 to 70% of waste (24), 15 to 50% of reducing agent (25) and 5 to 35% of binder (26), by weight.

9. Process according to any one of claims 1 to 8, in which a heat treatment is applied to the said agglomerates (21) before they are added into the said treatment reactor (2), in order to:
- eliminate any water contained in the said binder (26) and/or the said reducing agent (25), at a temperature exceeding 100°C;
- decompose the part of the said binder (26) and/or the said reducing agent (25) that can be decomposed at a temperature of about 400°C;
- and sinter the agglomerate (21) and reinforce its strength and mechanical cohesion, at a temperature close to 400°C.
- and thus obtain the required open pores.

10. Process according to claim 9, in which the temperature and duration of the said heat treatment are chosen to produce an agglomerate (21) with open pores to enable reduction of oxides contained in the said waste (24) in the middle of the liquid metal (15) and direct gas collection of the formed vapor zinc, by the said liquid metal (15) that has infiltrated into the middle of the said agglomerate (21).

11. Process according to any one of claims 1 to 10, in which the said liquid metal (15) may be copper (possibly oxidized), or a CuZn brass with a zinc content lower than the required final content.

12. Process according to claim 11, in which the said oxidized copper (15) is prepared in a refining furnace (1) supplied by the said treatment reactor (2).

13. Process according to any one of claims 1 to 12, in which the said agglomerates (21) are injected into the said treatment reactor (2) by dropping them or pneumatically for an induction or cupola type furnace, the agglomerates being also possibly added through electrodes in the case of an arc furnace.

14. Process according to any one of claims 1 to 13, in which an accessory may be added for stirring the contents of the treatment reactor (2) in order to accelerate the reaction dynamics.

15. Process according to any one of claims 1 to 14, in which the said liquid metal (15) and the said agglomerates (21) are covered by a blanket (48) of charcoal or a suitable flux in order to:
a - reduce zinc losses;
b - refine the brass formed;
c - accelerate reactions by displacing thermodynamic equilibriums.

16. Process according to any one of claims 1 to 15, in which the said binder (26) may also be the said reducing agent (25), and the same product performs the separate functions of the said binder and the said reducing agent.
